# EUROPEAN PATENT APPLICATION

(11) **EP 2 164 251 A2**
(43) Date of publication of application: **17.03.2010**
(21) Application number: 09168866.3
(22) Date of filing: 27.08.2009
(51) Int. Cl.: H04N 5/445

(54) **Apparatus and method for providing service information**

(30) Priority: 10.09.2008 KR 20080089443
(71) Applicant: Samsung Electronics Co., Ltd., Suwon-si, Gyeonggi-do 442-742 (KR)
(72) Inventor: Lee, Joo-yoen, Yongin-si, Gyeonggi-do (KR)
(74) Representative: Clark, David James

(57) **Abstract**

An apparatus and method for providing service information. A method for providing service information includes receiving data including service information and time information, comparing the time information with the current time, and displaying the service information if a time indicated by the time information is within a predetermined time period including the current time.

## Description

### CROSS-REFERENCE TO RELATED APPLICATIONS

### BACKGROUND OF THE INVENTION

### 1. Field of the Invention

Apparatuses and methods consistent with the present invention relate to providing service information, and more particularly, to providing service information only at a specified time.

### 2. Description of the Related Art

Image apparatuses are devices for reproducing or recording broadcasts, images recorded on recording media, or images transmitted from external devices. Due to the rapid development of image technology and broadcast technology, image apparatuses can provide many kinds of content. In particular, as image apparatuses such as digital televisions and Internet televisions have become available, it has become possible for user to view a wide range of content.

Such content may be produced and provided by broadcasting stations or on the Internet in real-time, or may be produced at an earlier date. If old content continues to be displayed on a television screen regardless of the time, the user may inconveniently continue to watch the same content. In addition, if old content continues to be displayed on a television screen having a restricted area, the television is not used efficiently.

Furthermore, if the user wishes to view particular content at a particular time, the user must know the broadcast time of the particular content and manually input the broadcast time into the television.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

An aspect of the present invention provides an apparatus and method for displaying service information only at the time at which the service information is provided.

According to an exemplary aspect of the present invention, there is provided a method for providing service information, the method including receiving data including service information and time information, comparing the time information with the current time, and displaying the service information if a time indicated by the time information is within a predetermined time period including the current time.

In receiving the data, the data may be received through the Internet.

Displaying the service information may include executing an application program to display the service information.

In displaying the service information, the service information may only be displayed if the time indicated by the time information is within the predetermined time period.

If the time indicated by the time information is not within the predetermined range of time including the current time, the service information may not be displayed, and execution of the application program may be finished.

The service information may be at least one of stock information, news information, weather information, and information related to an image.

The time information may be information regarding a time when the service information is generated.

The current time may be a time which is set in a device displaying the service information, and the current time may be based on at least one of a time input by a user, a time contained in a broadcast signal, and a time received from an external device.

The service information may correspond to at least one of information input by the user and caption information related to a displayed image.

According to another exemplary aspect of the present invention, there is provided a method for providing service information, the method including receiving service information corresponding to service request information through the Internet, and among the received service information, displaying only service information which is generated within a predetermined time period including a current time.

The service information may be at least one of stock information, news information, weather information, and information related to an image.

The current time may be a time which is set in a device displaying the service information, and may be based on at least one of a time input by a user, a time contained in a broadcast signal, and a time received from an external device.

The service request information may be at least one of information input by the user and caption information related to a displayed image.

According to another exemplary aspect of the present invention, there is provided an image apparatus, including an interface unit which receives data including service information and time information, and a display unit which displays the service information if a time indicated by the time information is within a predetermined time period including a current time.

The interface unit may receive the data through the Internet.

The display unit may not display the service information if the time information is not within the predetermined time period.

The time information may be information regarding a time when the service information is generated.

The service information may be at least one of stock information, news information, weather information, and information related to an image.

The current time may be a time which is set in the image apparatus, and may be based on at least one of a time input by a user, a time contained in a broadcast signal, and a time received from an external device.
The service information may correspond to at least one of information input by the user and caption information related to a displayed image.

According to another exemplary aspect of the present invention, there is provided a method for providing information, the method including receiving data from an information service, the data comprising displayable content and an associated time indication; comparing the time indication with a current time to determine a difference between the time indication and the current time; and displaying the content only if the difference between the time indication and a current time is less than a predetermined value.

The time indication may represent a time at which the displayable content was generated.

The displayable content may provide information which is most accurate at a time indicated by the time indication.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects of the present invention will be made more apparent by describing certain exemplary embodiments of the present invention with reference to the accompanying drawings, in which:
FIG. 1 is a block diagram illustrating a broadcast receiver, which is a kind of image apparatus, according to an exemplary embodiment of the present invention;
FIG. 2 is a flow chart illustrating a process of the broadcast receiver of FIG. 1 providing service information generated within a predetermined time period according to an exemplary embodiment of the present invention;
FIG. 3 is a block diagram illustrating a broadcast receiver according to another exemplary embodiment of the present invention; and
FIG. 4 is a flow chart illustrating a process of the broadcast receiver of FIG. 3 providing service information corresponding to caption information of a broadcast signal according to another exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the present invention can be practiced without those specifically defined matters. Also, well-known functions or constructions are not described in detail since they would obscure the invention with unnecessary detail.

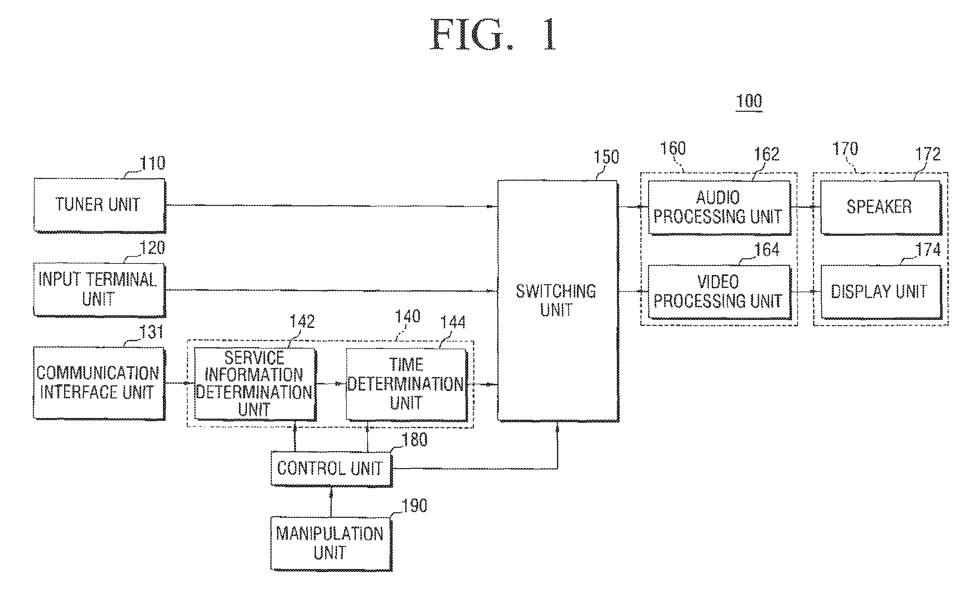

FIG. 1 is a block diagram illustrating a broadcast receiver 100, which is a kind of image apparatus, according to an exemplary embodiment of the present invention. As illustrated in FIG. 1, the broadcast receiver 100 may include a tuner unit 110, an input terminal unit 120, a communication interface unit 131, a service information providing unit 140, a switching unit 150, a signal processing unit 160, a signal output unit 170, a control unit 180, and a manipulation unit 190.

The tuner unit 110 receives a broadcast from a broadcasting station or a satellite wirelessly or via a wired line.

The input terminal unit 120 is a terminal to connect the broadcast receiver 100 to an external storage medium, such as a camera, camcorder, digital versatile disc (DVD) player, portable media player (PMP), hard disk drive (HDD), or memory card. Such external storage media are merely examples, and any device having a recording medium which records moving images can function as an external storage medium.

The communication interface unit 130 is a device to connect the broadcast receiver 100 to an external device. The communication interface unit 130 is connected to an external device through a network so as to receive data including service information and time information from the external device. The external device connected through the network may be a mail server, a messenger server, a web server, user-created content (UCC) server, a personal computer, or the like.

In the exemplary embodiments of the present invention, the broadcast receiver 100 may operate in various modes including a broadcast mode, a recording medium reproduction mode, and an Internet mode.

In the broadcast mode, the broadcast receiver 100 receives a broadcast signal through the tuner unit 110 and reproduces the broadcast signal. In the recording medium reproduction mode, the broadcast receiver 100 receives a file such as a moving image or music file which is stored in an external storage medium through the input terminal unit 120, and reproduces the file. In the Internet mode, the broadcast receiver 100 receives service information such as news, weather forecasts, and stock reports through the Internet, and provides the user with the service information. In particular, in the Internet mode, the broadcast receiver 100 provides the user with the service information, and at the same time may receive and reproduce a broadcast signal or may receive and reproduce a file stored in an external storage medium.

The broadcast receiver 100 may include diverse modes other than the broadcast mode, the recording medium reproduction mode, and the Internet mode. However, for convenience of description, description of the modes is limited to the three modes in the exemplary embodiments of the present invention.

The service information providing unit 140 transmits service information to the switching unit 150. The service information providing unit 140 may include a service information determination unit 142 and a time determination unit 144.

The service information determination unit 142 receives data including service information and time information from the communication interface unit 131, and determines whether the service information corresponds to preset service information (also referred to as service request information). The service request information may be information input by the user or information related to a currently reproduced image. For example, if the user wishes to receive information regarding "stocks" using the broadcast receiver 100, the user may input "stocks" using the manipulation unit 190. In this case, the service information determination unit 142 determines whether data received from the communication interface unit 131 includes service information regarding "stocks". If the data received from the communication interface unit 131 includes service information regarding "stocks", the service information determination unit 142 transmits the data to the time determination unit 144. If the data received from the communication interface unit 131 does not include service information regarding "stocks", the service information determination unit 142 discards the data.

The time determination unit 144 compares time information included in the data received from the service information determination unit 142 with a time of the broadcast receiver 100. If a time indicated by the time information is within a predetermined time period of the time of the broadcast receiver 100, the time determination unit 144 transmits the service information to the switching unit 150. If the time indicated by the time information is not within the predetermined time period including the time of the broadcast receiver 100, the time determination unit 144 discards the service information. The time information is time information related to the service information, for example, information indicating a time at which the service information was generated.

The time of the broadcast receiver 100 is a current time provided by the broadcast receiver 100. The current time of the broadcast receiver 100 may be manually set by the user, received through a broadcast signal, or received through the Internet.

The predetermined time period of the time of the broadcast receiver means a predetermined range of time including the time of the broadcast receiver 100, i.e., a time period extending from a time before the current time of the broadcast receiver 100 to the current time of the broadcast receiver 100 or to a time after the current time of the broadcast receiver 100 in the case where the current time of the broadcast receiver 100 is not synchronized with a current time of the content provider.

As described above, the broadcast receiver 100 does not always provide service information, but provides only service information within the predetermined time period of the time of the broadcast receiver 100 by comparing the time information with the time of the broadcast receiver 100. Therefore, the broadcast receiver 100 is prevented from continuing to provide the same service information, so the screen of the broadcast receiver 100 can be used more efficiently.

The switching unit 150 performs switching so as to transmit at least one of outputs of the tuner unit 110, the input terminal unit 120, and the service information providing unit 140 to the signal processing unit 160. The switching operation of the switching unit 150 is controlled by the control unit 180.

The signal processing unit 160 may include an audio processing unit 162 to process an audio signal received from the switching unit 150, and a video processing unit 164 to process a video signal received from the switching unit 150. More specifically, the audio processing unit 162 decodes and processes the audio signal to be output, and the video processing unit 164 performs decoding, scaling, interlacing, and the like on the video signal. In addition, the video processing unit 164 decodes text data received from the switching unit 150.

The signal output unit 170 may include a speaker 172 to output the audio signal processed by the audio processing unit 162, and a display unit 174 to display the video signal processed by the video processing unit 164.

The control unit 180 determines a user command received from the manipulation unit 190 and controls the operation of the broadcast receiver 100. In particular, the control unit 180 determines the mode of the broadcast receiver 100 based on a user command input through the manipulation unit 190. If the control unit 180 determines that the broadcast receiver 100 is in the internet mode and service request information is set, the control unit 180 controls the service information determination unit 142 to determine service information corresponding to the service request information, and controls the time determination unit 144 and other function blocks to display only service information within the predetermined time period of the time of the broadcast receiver 100.

The manipulation unit 190 receives a user command input through manipulation by a user and transmits the user command to the control unit 180. The manipulation unit 190 may be formed integrally with the broadcast receiver 100 or formed separately from the broadcast receiver 100. The manipulation unit 190 may be implemented as a user interface to enable a user to input a command using a menu screen, or implemented as a remote control to input a user command and a light receiver to receive an output signal from the remote control and transmit the output signal to the control unit 180.

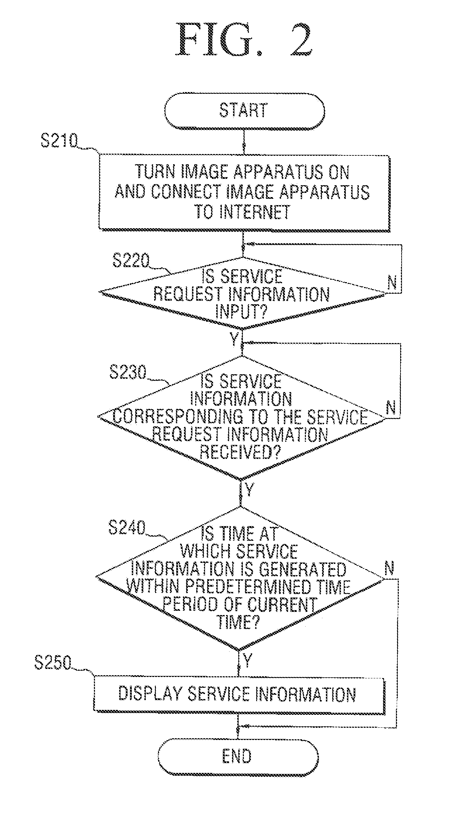

FIG. 2 is a flow chart illustrating a process of the broadcast receiver 100 of FIG. 1 providing service information generated within a predetermined time period according to an exemplary embodiment of the present invention.

The user turns the broadcast receiver 100 on and connects the broadcast receiver 100 to the Internet (S210). That is, the user turns the broadcast receiver 100 on and sets the broadcast receiver 100 to the Internet mode.

Subsequently, the control unit 180 determines whether service request information is input (S220). For example, if the user wishes to receive service information regarding "Samsung stocks" using the broadcast receiver 100, the user may input "Samsung stocks" using the manipulation unit 190.

The service information determination unit 142 determines whether data received through the communication interface unit 131 includes service information corresponding to the service request information (S230). More specifically, the communication interface unit 131 receives a diverse range of data through the Internet and transmits the data to the service information determination unit 142. The service information determination unit 142 determines whether the received data includes service information related to "Samsung stocks". For example, the service information related to "Samsung stocks" may be the current price of "Samsung stocks" or news related to "Samsung stocks".

If the data received through the communication interface unit 131 includes service information corresponding to the service request information (S230-Y), the time determination unit 144 determines whether a time at which the service information was generated is within a predetermined time period of the current time (S240). For example, if the information determination unit 142 determines that the received data includes service information related to "Samsung stocks", the information determination unit 142 transmits the data to the time determination unit 144. The time determination unit 144 determines whether the time at which the "Samsung stocks" information was generated is within a predetermined time period of the current time. The predetermined time period may be preset by the user or the manufacturer of the broadcast receiver 100. Since stock prices change in real time while the stock market is open, the predetermined time period may be five minutes.

If the time at which the service information was generated is within the predetermined time period of the current time (S240-Y), an application program to display the service information is executed so that the service information can be displayed (S250). That is, if the time at which the service information was generated is within the predetermined time period of the current time, the time determination unit 144 determines that the service information is valid and thus transmits the service information to the video processing unit 162 through the switching unit 150. The video processing unit 162 processes the service information and transmits the processed service information to the display unit 174. As a result, the display unit 174 displays the service information.

Alternatively, if the time at which the service information was generated is not within the predetermined time period of the current time (S240-N), the service information is not displayed since the service information generated outside the predetermined time period of the current time is invalid. That is, if the time at which the service information was generated is not within the predetermined time period of the current time, execution of the application program to display the service information is terminated.

As described above, since the service information is displayed only when the time at which the service information was generated is within the predetermined time period of the current time, the application program to provide the service information is automatically executed only in the available service time. Accordingly, the problem that the broadcast receiver 100 is hidden by unnecessary information can be solved. For example, if the stock market is open from 9am until 3pm and the user wishes to receive information regarding stock prices in the Internet, the broadcast receiver 100 provides service information regarding the stock price from 9:00 AM until 3:00 PM and does not provide service information regarding the stock price at other times, thereby increasing convenience to the user.

In addition, as long as the user inputs the service request information, the user can receive the service information only at a time when the service information is provided without separately inputting a time for receiving the service information.

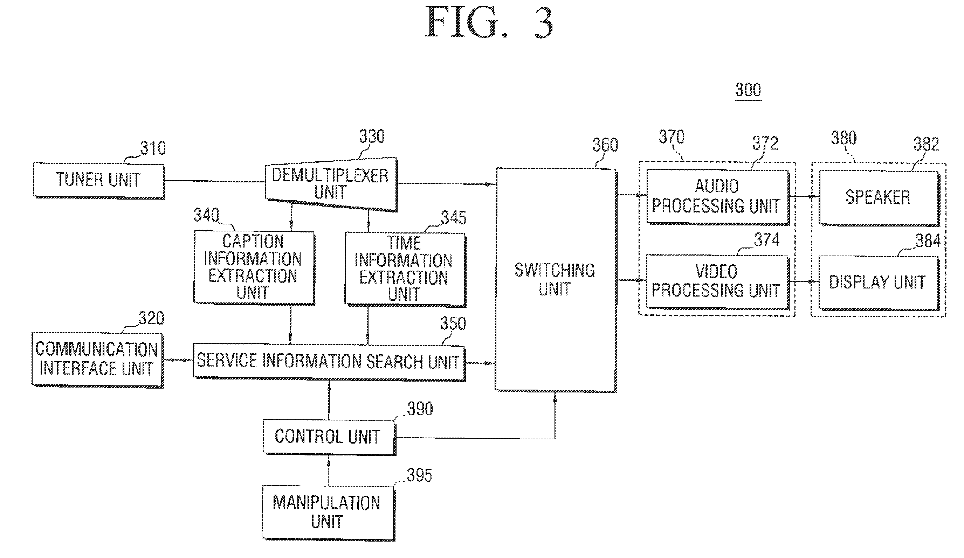

FIG. 3 is a block diagram illustrating a broadcast receiver 300 according to another exemplary embodiment of the present invention. As illustrated in FIG. 3, the broadcast receiver 300 may include a tuner unit 310, a communication interface unit 320, a demultiplexer unit 330, a caption information extraction unit 340, a time information extraction unit 345, a service information search unit 350, a switching unit 360, a signal processing unit 370, a signal output unit 380, a control unit 390, and a manipulation unit 395.

Since the tuner unit 310, the communication interface unit 320, the switching unit 360, the signal processing unit 370, the signal output unit 380, the control unit 390, and the manipulation unit 395 in FIG. 3 are configured to have the same function as the tuner unit 110, the communication interface unit 131, the switching unit 150, the signal processing unit 160, the signal output unit 170, the control unit 180, and the manipulation unit 190 in FIG. 1, detailed description thereof is not repeated.

The demultiplexer unit 330 separates a video signal, an audio signal, and a data signal from a broadcast signal received from the tuner unit 310, transmits the video signal and the audio signal to the signal processing unit 370, and transmits the data signal to the caption information extraction unit 340 and the time information extraction unit 345.

The caption information extraction unit 340 extracts caption information from the data signal. Caption information includes open captions and closed captions. Open captions may display a list of the cast or production team, song titles, or the name of the singer regardless of the user's intention. Closed captions may display text information containing a character's lines on the broadcast program or a video tape according to the user's intention. Since such caption information may be service request information, the caption information extraction unit 340 extracts the caption information from the data signal and transmits the caption information to the service information search unit 350.

The time information extraction unit 345 extracts time information, which is data regarding the current time, from the data signal and transmits the time information to the service information search unit 350.

The service information search unit 350 searches for service information corresponding to the caption information which is generated within a predetermined time period of the current time on the Internet. The service information found is transmitted to the switching unit 360.

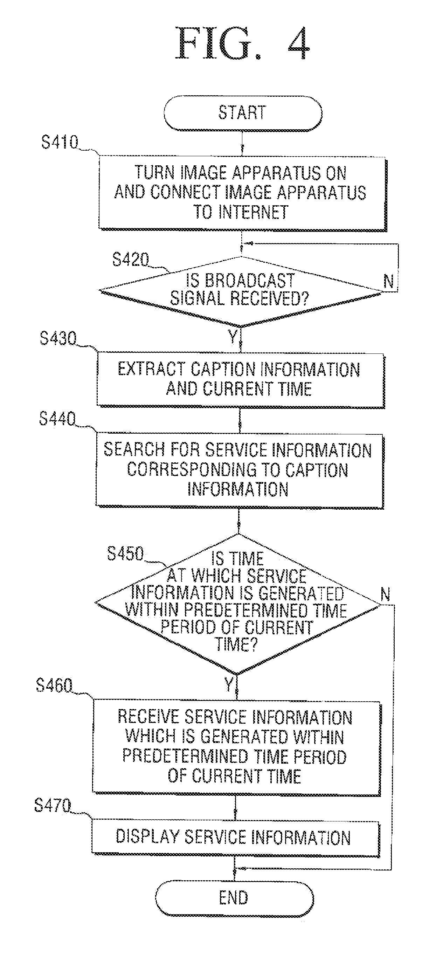

FIG. 4 is a flow chart illustrating a process of the broadcast receiver of FIG. 3 providing service information corresponding to caption information of a broadcast signal according to another exemplary embodiment of the present invention.

The user turns the broadcast receiver 300 on and connects the broadcast receiver 300 to the Internet (S410). That is, the user turns the broadcast receiver 300 on and sets the broadcast receiver 300 to the Internet mode.

Subsequently, the control unit 390 determines whether a broadcast signal is received through the tuner unit 310 (S420). More specifically, after setting the broadcast receiver 300 to the Internet mode, the user may input a command to view a specific broadcast program and thus the tuner unit 310 receives the broadcast program through a broadcast channel.

If a broadcast signal is received through the tuner unit 310 (S420-Y), the caption information extraction unit 340 extracts caption information from the broadcast signal and the time information extraction unit 345 extracts time information from the broadcast signal, so the caption information and the time information are transmitted to the service information search unit 350 (S430).

The service information search unit 350 searches for service information corresponding to the caption information in a web server or the like through the communication interface unit 130 (S440).

The service information search unit 350 determines whether the time when the service information was generated is within a predetermined time period of the current time (S450). If the service information was generated outside the predetermined time period of the current time, the user may already be aware of the service information, so the service information is invalid.

If the time when the service information was generated is within the predetermined time period of the current time (S450-Y), the service information search unit 350 receives the service information (S460).

Subsequently, the service information is processed and displayed (S470).

As described above, service information may be service request information input by the user or information related to an image currently being reproduced. Accordingly, the user can view service information related to the image currently being reproduced together with the image without separately inputting a command, thereby increasing user convenience.

In the exemplary embodiments of the present invention, stock information and caption information of a broadcast signal are described as service information, but examples of service information are not limited thereto. For example, service information may be weather information, news information, or text information recorded on a recording medium.

In addition, in the exemplary embodiments of the present invention, a broadcast receiver is described as an image apparatus, but examples of the image apparatus are not limited thereto. The technical idea of the present invention can be applied to any kind of image apparatus capable of receiving service information through the Internet and providing the service information.

Furthermore, in the exemplary embodiments of the present invention, the time when service information is generated is described as time information, but time information is not limited thereto. Time information may be information regarding a time related to service information. For example, if service information is a weather forecast, time information may be the time when the weather forecast was made.

Moreover, in the exemplary embodiments of the present invention, the caption information extraction unit, the time information extraction unit, and the service information search unit are provided separately from the control unit, but this is only for convenience of description. The control unit may be implemented to have the functions of the caption information extraction unit, the time information extraction unit, and the service information search unit.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for providing service information, the method comprising:
receiving data including service information and time information;
comparing the time information with a current time; and
displaying the service information if a time indicated by the time information is within a predetermined time period including the current time.

2. The method according to claim 1, wherein in the receiving the data, the data is received through the Internet.

3. The method according to claims 1 or 2, wherein the displaying the service information comprises executing an application program to display the service information.

4. The method according to claims any one of 1 to 3, wherein the displaying the service information comprises displaying the service information only if the time indicated by the time information is within the predetermined time period.

5. The method according to claim 4, further comprising, if the time indicated by the time information is not within the predetermined time period, terminating execution of an application program to display the service information.

6. The method according to claims any one of 1 to 5, wherein the service information is at least one of stock information, news information, weather information, and information related to an image.

7. The method according to claims any one of 1 to 6, wherein the time information is information regarding a time when the service information is generated.

8. The method according to claims any one of 1 to 7, wherein the current time is a time which is set in a device displaying the service information, and the current time is based on at least one of a time input by a user, a time contained in a broadcast signal, and a time received from an external device.

9. The method according to claims any one of 1 to 8, wherein the service information corresponds to at least one of information input by a user and caption information related to a displayed image.

10. An image apparatus, comprising:
an interface unit which receives data including service information and time information; and
a display unit which displays the service information if a time indicated by the time information is within a predetermined time period including a current time.

11. The image apparatus according to claim 10, wherein the interface unit receives the data through the Internet.

12. The image apparatus according to claims 10 or 11, wherein the display unit does not display the service information if the time indicated by the time information is not within the predetermined time period.

13. The image apparatus according to claims any one of 10 to 12, wherein the time information is information regarding a time when the service information is generated.

14. The image apparatus according to claims any one of 10 to 13, wherein the service information is at least one of stock information, news information, weather information, and information related to an image.

15. The image apparatus according to claims any one of 10 to 14, wherein the current time is a time which is set in the image apparatus, and the current time is based on at least one of a time input by a user, a time contained in a broadcast signal, and a time received from an external device.
